# EUROPÄISCHE PATENTSCHRIFT

(11) **EP 3 701 601 B1**
(45) Veröffentlichungstag und Bekanntmachung des Hinweises auf die Patenterteilung: **12.07.2023**
(21) Anmeldenummer: 18785330.4
(22) Anmeldetag: 08.10.2018
(51) Int. Cl.: H01R 43/02, H01R 11/12, H01R 4/02

(54) **VERFAHREN ZUM STOFFSCHLÜSSIGEN FÜGEN EINER ELEKTRISCHEN LEITUNG AN EIN ELEKTRISCHES KONTAKTTEIL UND ELEKTRISCHE LEITUNGSANORDNUNG**
METHOD FOR THE INTEGRALLY BONDED JOINING OF AN ELECTRIC CABLE TO AN ELECTRICAL CONTACT PART, AND ELECTRIC CABLE ARRANGEMENT
PROCÉDÉ DESTINÉ À ASSEMBLER PAR PÉNÉTRATION DE MATIÈRE UN CÂBLE ÉLECTRIQUE À UNE PARTIE DE CONTACT ÉLECTRIQUE ET SYSTÈME DE CÂBLE ÉLECTRIQUE

(30) Priorität: 23.10.2017 DE 102017124693
(43) Veröffentlichungstag der Anmeldung: 02.09.2020
(73) Patentinhaber: Lisa Dräxlmaier GmbH, 84137 Vilsbiburg (DE)
(72) Erfinder: FORSTMEIER, Christoph, 84028 Landshut (DE)
(86) Internationale Anmeldenummer: PCT/EP2018/077314
(87) Internationale Veröffentlichungsnummer: WO 2019/081193

(56) Entgegenhaltungen:
- WO-A1-2012/063961
- DE-A1-102008 059 481
- DE-A1-102011 017 070
- DE-B3- 10 346 160
- DE-B3-102013 101 876
- JP-A- H08 138 822
- JP-A- 2004 050 204

## Beschreibung

### Technisches Gebiet

Die vorliegende Erfindung betrifft ein Verfahren zum stoffschlüssigen Fügen einer elektrischen Leitung an ein elektrisches Kontaktteil gemäß dem Oberbegriff des Anspruchs 1. Die vorliedende Erfindung betrifft auch eine elektrische Leitungsanordnung die durch dieses Verfahren erstellt wird.

### Stand der Technik

Ein Verfahren gemäß dem Oberbegriff des Anspruchs 1 ist aus der DE 10 2013 101 876 B3 bekannt. Darin wird ein Reibschweißverfahren verwendet, um insbesondere Litzenleiter aus Aluminium mit einem elektrischen Kontaktteil stoffschlüssig zu fügen. Für den Fall eines Litzenleiters wird dabei ein Bündel von Einzelsträngen über eine Eintrittsöffnung in eine Aufnahmehülse des Kontaktteils eingeführt. Dann wird zum Herstellen einer stoffschlüssigen Fügeverbindung zumindest zwischen einer Teilanzahl der Einzelstränge mit der Innenwand der Aufnahmehülse mittels eines Schweißdorns Schweißenergie eines Schweißprozesses eingespeist. Ferner offenbart die JP H08 138822 A ein Ultraschallschweißverfahren zur Schadensreduzierung eines geschweißten Materials.

Obwohl mit diesem Verfahren gute Schweißergebnisse erzielt werden können, hat es sich in der Praxis gezeigt, dass z.B. bei einer aus Aluminium gefertigten Leitung Oxidschichten auf dem zu verschweißenden Werkstoff verbleiben können. Diese können die Schweißqualität bzw. das Langzeitverhalten der Fügeverbindung beeinträchtigen.

### Beschreibung der Erfindung

Die Aufgabe der Erfindung ist es daher, unter Einsatz konstruktiv möglichst einfacher Mittel eine Möglichkeit zu schaffen, mit der Oxidschichten einer elektrischen Leitung beim stoffschlüssigen Fügen an ein elektrisches Kontaktteil zuverlässig aufgebrochen werden können.

Die Aufgabe wird durch den Gegenstand der unabhängigen Anprüche gelöst. Vorteilhafte Weiterbildungen der Erfindung sind in den abhängigen Ansprüchen, der Beschreibung und den begleitenden Figuren angegeben.

Ein erfindungsgemäßes Verfahren zum stoffschlüssigen Fügen einer elektrischen Leitung an ein elektrisches Kontaktteil umfasst die folgenden Schritte:
- Einbringen eines freigelegten Leitungsendes der Leitung in eine Aufnahmehülse des Kontaktteils. Wenn die Leitung einen Isolationsmantel aufweist, wird dieser zum Freilegen eines Leiters der Leitung entfernt. Die Aufnahmehülse kann an ihren beiden gegenüberliegenden Stirnseiten offen sein, damit die Leitung von der einen Stirnseite her eingeführt werden kann. Die Aufnahmehülse und die Leitung werden im Folgenden auch allgemein als Fügepartner bezeichnet.
- Rotieren eines Reibschweißwerkzeugs an oder ggf. auch abschnittsweise innerhalb einer offenen Stirnseite der Aufnahmehülse zum stoffschlüssigen Verbinden des Leitungsendes mit der Aufnahmehülse. Diese offene Stirnseite kann diejenige sein, die derjenigen gegenüberliegt, von der her die Leitung eingeführt wird. Das Reibschweißwerkzeug kann z.B. eine Schulter und einen davon hervorstehenden Pin aufweisen, wie es insbesondere zum Rührreibschweißen verwendet wird. Das Rotieren bewirkt eine Reibung zwischen den Fügepartnern und dem Reibschweißwerkzeug und führt nahe des Schmelzpunktes der Werkstoffe der Fügepartner zu deren Plastifizierung und damit zu einer stoffschlüssigen Verbindung derselben.
- Einbringen eines pulverförmigen Metallzusatzwerkstoffs vor dem oder ggf. auch noch während des Rotierens in die Aufnahmehülse derart, dass der Metallzusatzwerkstoff zumindest teilweise zwischen dem Leitungsende und/oder der Aufnahmehülse und dem Reibschweißwerkzeug angeordnet wird. D.h., dass zusätzlich zu den Werkstoffen der eigentlichen Fügepartner ein weiterer Metallwerkstoff eingebracht wird. Der Metallzusatzwerkstoff liegt pulverförmig in z.B. Partikeln vor, die sich um das Leitungsende herum auch verteilen lassen. Prinzipiell wäre es denkbar, dass es sich bei dem Metallzusatzwerkstoff um einen zu den Fügepartnern gleichen Werkstoff handelt. Bevorzugt ist jedoch ein dazu unterschiedlicher Werkstoff.

Das erfindungsgemäße Verfahren bietet damit gleich mehrere Vorteile. So kann der Metallzusatzwerkstoff in Kontakt mit den Fügepartnern dort vorhandene Oxidschichten aufbrechen und dadurch die Schweißbarkeit bzw. Schweißqualität erhöhen. Die Oxidschichten können beispielsweise durch Reibung der Partikel des Metallzusatzwerkstoffs an den Fügepartnern aufgebrochen werden. Darüber hinaus kann der pulverförmige Metallzusatzwerkstoff aufgrund seiner Partikel auch die Reibung bzw. der Reibungswiderstand des Reibschweißwerkzeugs gegenüber den Fügepartnern erhöhen, wodurch das Plastifizieren der Fügepartner beschleunigt werden kann. Außerdem kann durch den Metallzusatzwerkstoff eine Schweißoberfläche gebildet werden, die insbesondere vor Umwelteinflüssen, wie z.B. Korrosion, schützt.

Je nach zu verbindenden Fügepartnern können unterschiedliche Mengen des Metallzusatzwerkstoffs vorteilhaft sein. Dementsprechend sieht eine Weiterbildung der Erfindung vor, dass der Metallzusatzwerkstoff vor dem Rotieren des Reibschweißwerkzeugs mittels einer einstellbaren Dosiereinrichtung in die Aufnahmehülse eingebracht wird.

Um den Metallzusatzwerkstoff, insbesondere dessen Partikel, besser zwischen dem Leiter und der Aufnahmehülse zu verteilen, kann der Metallzusatzwerkstoff nach dem Einbringen mittels Ultraschall innerhalb der Aufnahmehülse verteilt werden. Hierfür können mit einer Ultraschalleinrichtung Ultraschallschwingungen erzeugt werden, die zumindest die Aufnahmehülse z.B. schütteln können, damit die Partikel in die gewünschte Lage bewegt werden.

Das Aufbrechen der Oxidschichten sowie das Erhöhen der Reibung zwischen dem Reibschweißwerkzeug und den Fügepartnern lässt sich noch weiter verbessern, wenn der Metallzusatzwerkstoff mit einer Körnungsgröße und/oder einer Körnungsform gewählt wird, die die Reibung mit dem Reibschweißwerkzeug erhöht. Folgende Körnungsgrößen haben sich als besonders geeignet erwiesen: 0,1 bis 250 µm, insbesondere 30 bis 45 und 75 bis 250 µm. Die Körnungsform kann ausgewählt werden aus: spratzig, sphärisch (kugelförmig), flaky (Blättchenförmig) und amorph.

Um den Metallzusatzwerkstoff auf die Fügepartner abzustimmen, kann der Metallzusatzwerkstoff ein Gemisch unterschiedlicher Korngrößen und/oder Körnungsformen sein. Das Gemisch kann auch inhomogen nach Art eines Gemenges sein. Demnach können mehrere Teile einzelner Korngrößen bzw. Körnungsformen miteinander vermischt werden.

Erfindungsgemäß wird der Metallzusatzwerkstoff aus den folgenden Werkstoffen ausgewählt oder gemischt: Messing, Bronze, Silber oder Nickel sowie deren Legierungen.

Um verschiedene Anschlussteile, wie etwa einen Kabelschuh, einen Steckkontakt oder ähnliches, vorsehen zu können, kann das Kontaktteil zweiteilig mit der Aufnahmehülse und einem Anschlussteil zum Verbinden mit einem elektrischen Gegenanschluss ausgebildet sein. Die beiden Teile des Kontaktteils können dann vorab z.B. durch Durchsetzfügen, Bördeln, Falzen oder ähnliches miteinander verbunden werden.

Um bei einem zweiteiligen Kontaktteil insbesondere die Aufnahmehülse mit dem Anschlussteil noch besser zu verbinden, kann zum stoffschlüssigen Fügen der Aufnahmehülse mit dem Anschlussteil zusätzlich ein Lotwerkstoff eingebracht werden. Damit kann neben einer mechanischen Verbindung auch eine stoffschlüssige Verbindung erreicht werden. Der Lotwerkstoff kann dabei von außen zugeführt werden. Die zum Aufschmelzen des Lotwerkstoffs benötigte Wärmeenergie kann einfach beim Reibschweißen mit erzeugt werden, da dadurch sowieso ein Wärmeeintrag im Bereich des Lotwerkstoffs erfolgt, so dass hier kein weiterer Prozessschritt notwendig ist.

In einer besonders vorteilhaften Weiterbildung der Erfindung kann der Lotwerkstoff auch bereits in das Kontaktteil integriert sein. Insbesondere können die Aufnahmehülse und/oder das Anschlussteil ein Lotwerkstoffdepot aufweisen, das derart angeordnet ist, dass aufgrund des Rotierens des Reibschweißwerkzeugs durch Wärmeeintrag und/oder durch eine daraus resultierende Restwärme der Lotwerkstoff zum Fügen von Aufnahmehülse und Anschlussteil freigesetzt wird. Damit muss der Lotwerkstoff nicht von außen zugeführt werden, sondern ist bereits im dafür vorgesehenen Bereich angeordnet.

Für eine besonders gute mechanische und insbesondere auch elektrische Verbindung können die Aufnahmehülse und das Anschlussteil vor dem Einbringen des Leitungsendes miteinander verpresst werden. Dabei kann das eine Teil in das andere eingesteckt und das äußere Teil dann aus seitlicher oder radialer Richtung verpresst werden.

Es ist auch denkbar, dass vor dem Rotieren zusätzlich ein, vorzugsweise pulverförmiger, Lotwerkstoff derart in die Aufnahmehülse eingebracht wird, dass der Lotwerkstoff zum Aufschmelzen in einer Wärmeeintragszone angeordnet wird. Der Lotwerkstoff kann also auch wie der Metallzusatzwerkstoff pulverförmig vorliegen und kann dann ähnlich wie dieser in die Aufnahmehülse eingebracht werden. Hier dient der Lotwerkstoff also primär dem verbesserten stoffschlüssigen Fügen der Leitung mit der Aufnahmehülse und ist nicht auf die Variante mit dem zweiteiligen Kontaktteil beschränkt.

Noch besser kann die stoffschlüssige Verbindung zwischen der Leitung und der Aufnahmehülse ausgebildet werden, wenn das Kontaktteil ein Lotwerkstoffdepot in einer Wärmeeintragszone aufweist, aus dem aufgrund des Rotierens des Reibschweißwerkzeugs durch Wärmeeintrag und/oder durch eine daraus resultierende Restwärme der Lotwerkstoff aufgeschmolzen wird. Die stoffschlüssige Verbindung unter Einsatz des Metallzusatzwerkstoffs wird also nochmal durch einen zusätzlichen Lotwerkstoff verbessert.

Die Erfindung lässt sich besonders vorteilhaft einsetzen, wenn die Leitung einen Leiter aus einem Aluminiumwerkstoff aufweist. Aluminium lässt sich aufgrund seines Kriech- und Setzverhaltens mechanisch nur schwer verbinden, weil sich solche Verbindungen mit der Zeit lockern können. Durch die stoffschlüssige Verbindung wird eine dauerhafte Verbindung hergestellt.

Noch vorteilhafter lässt sich die Erfindung einsetzen, wenn die Leitung als Litzenleiter ausgeführt ist und der Metallzusatzwerkstoff zwischen den Litzen verteilt wird. Insbesondere können die Partikel des pulverförmigen Metallzusatzwerkstoffs zwischen die Litzen gebracht und dort infolge des Reibschweißens aufgeschmolzen werden.

Das erfindungsgemäße Verfahren bietet insbesondere bei Werkstoffkombinationen Vorteile, die in der elektrochemischen Spannungsreihe zueinander ungünstige Stellungen haben. Dementsprechend bietet die Erfindung Vorteile, wenn das Kontaktteil wenigstens im Bereich der Aufnahmehülse aus einem Kupferwerkstoff gefertigt ist.

Die Erfindung betrifft auch eine elektrische Leitungsanordnung, die wenigstens eine elektrische Leitung und wenigstens ein elektrisches Kontaktteil aufweist, die durch das vorstehend beschriebene Verfahren stoffschlüssig gefügt sind. Diese Leitungsanordnung lässt sich kostengünstig herstellen und bietet hervorragende Langzeiteigenschaften, insbesondere auch bei Kombination unterschiedlicher Werkstoffe.

### Kurze Figurenbeschreibung

Nachfolgend wird ein vorteilhaftes Ausführungsbeispiel der Erfindung unter Bezugnahme auf die begleitenden Figuren erläutert. Es zeigen:
- Figur 1: eine erfindungsgemäße elektrische Leitungsanordnung mit stoffschlüssiger Verbindung zwischen einer Leitung und einem elektrischen Kontaktteil in einer Schnittansicht,
- Figur 2: eine erfindungsgemäße elektrische Leitungsanordnung, wobei eine Dosiereinrichtung einen pulverförmigen Metallzusatzwerkstoff in die Leitungsanordnung einbringt,
- Figur 3: ein weiteres Ausführungsbeispiel einer erfindungsgemäßen elektrischen Leitungsanordnung, bei der das Kontaktteil zweiteilig ausgeführt ist und ein optionale Lotwerkstoffdepots aufweist,
- Figur 4: eine erfindungsgemäße elektrische Leitungsanordnung, bei der eine Ultraschalleinrichtung den pulverförmigen Metallzusatzwerkstoff verteilt,
- Figur 5: eine elektrische Leitungsanordnung, bei der ein Reibschweißwerkzeug zum Rotieren zum Ausbilden einer stoffschlüssigen Verbindung zwischen einer Leitung und einem Kontaktteil ausgebildet wird.

Die Figuren sind lediglich schematische, exemplarische Darstellungen und dienen nur der Erläuterung der Erfindung. Gleiche oder gleichwirkende Elemente sind durchgängig mit den gleichen Bezugszeichen versehen.

### Detaillierte Beschreibung

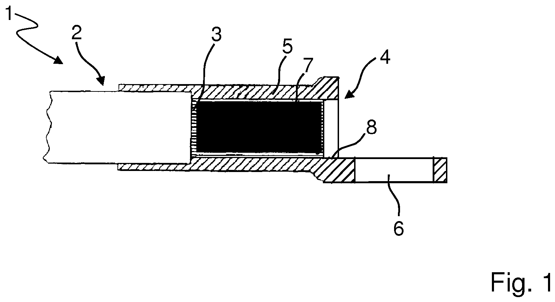

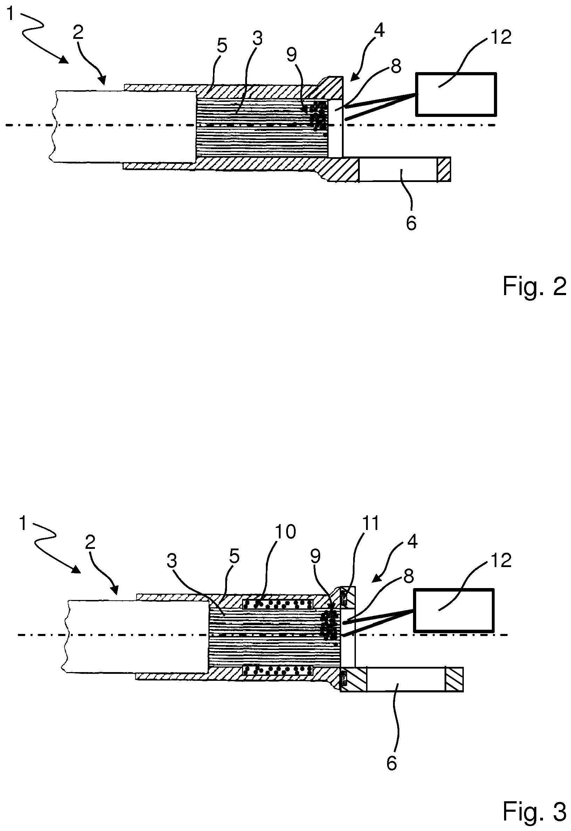

In Figur 1 ist in einer Schnittansicht eine elektrische Leitungsanordnung 1 dargestellt, die eine isolierte elektrische Leitung 2 mit einem als Litzenleiter ausgestalteten elektrischen Leiter 3 aus einem Aluminiumwerkstoff sowie ein dazu separates elektrisches Kontaktteil 4 mit einer Aufnahmehülse 5 und einem Anschlussteil 6 aus einem Kupferwerkstoff aufweist. Die Leitung 2 bzw. ihr Leiter 3 ist an das Kontaktteil 4 stoffschlüssig gefügt, so dass zwischen diesen Fügepartnern eine stoffschlüssige Verbindung 7 besteht. Stirnseitig verfügt die Aufnahmehülse 5 über eine Öffnung 8, über die die stoffschlüssige Verbindung 7 z.B. zur optischen Qualitätsprüfung zugänglich ist. Die stoffschlüssige Verbindung 7 ist unter Zugabe eines pulverförmigen Metallzusatzwerkstoffs 9 (siehe Figuren 2 bis 5) aus z.B. Messing ausgebildet. Diese Leitungsanordnung 1 eignet sich insbesondere für Leitungen größeren Durchmessers von ca. 10 bis 160 mm², besonders vorteilhaft für Durchmesser ab 35 mm².

Die Figuren 2 und 3 zeigen in jeweils einer Schnittansicht unterschiedliche Ausführungsbeispiele der Leitungsanordnung 1. Diese unterscheiden sich insbesondere dadurch, dass im Ausführungsbeispiel gemäß Figur 2 das Kontaktteil 4 einteilig ausgeführt ist und daher die Aufnahmehülse 5 und der Anschlussteil 6 einstückig ausgebildet sind. Dies ist in Figur 2 auch durch die gemeinsame Schraffur angedeutet. Im weiteren Ausführungsbeispiel gemäß Figur 3 ist das Kontaktteil 4 dagegen zweiteilig mit separat ausgebildeten Aufnahmehülse 5 und Anschlussteil 6 ausgeführt, was durch die unterschiedliche Schraffur angedeutet ist.

Des Weiteren sind bei dem Ausführungsbeispiel gemäß Figur 3 auch ein erstes Lotwerkstoffdepot 10 und ein zweites Lotwerkstoffdepot 11 vorgesehen, in denen z.B. auch unterschiedliche Lotwerkstoffe vorgehalten werden können. Diese lassen sich durch einen Wärmeeintrag in die Aufnahmehülse 5 aufschmelzen und können dadurch eine stoffschlüssige Lötverbindung ausbilden. Das zweite Lotwerkstoffdepot 11 ist insbesondere bei der zweiteiligen Ausgestaltung des Kontaktteils 4 gemäß dem Ausführungsbeispiel nach Figur 3 vorgesehen, da es eine stoffschlüssige Verbindung zwischen der Aufnahmehülse 5 und dem Anschlussteil 6 ausbilden kann. Der jeweilige Lotwerkstoff ist hier pulverförmig vorgesehen. Das jeweilige Lotwerkstoffdepot 10, 11 kann in Form eines abschnittsweisen Materialauftrags des Lotwerkstoffs auf dem Kupferwerkstoff des Kontaktteils 4, einer Art Tasche, in der der Lotwerkstoff eingebracht ist, oder durch ähnliche Maßnahmen ausgebildet sein.

Im Folgenden wird anhand der Figuren 2 bis 5 erläutert, wie die Leitungsanordnung 1 hergestellt werden kann.

Demnach werden, wie in Figur 2 oder 3 gezeigt, zunächst die Leitung 2 mit freigelegtem Leiter 3 und das Kontaktteil 4 als zueinander separate Teile bereitgestellt. Der durch Abisolieren freigelegte Leiter 3 ist in der Aufnahmehülse 5 Kontaktteils 4 aufgenommen und wird durch diese an seinem Außenumfang umschlossen. Die Aufnahmehülse 5 weist stirnseitig eine Öffnung 8 auf, durch die ein pulverförmiger Metallzusatzwerkstoff 9 aus z.B. Messing zugeführt und so in die Aufnahmehülse 5 eingebracht wird. Hierzu wird hier eine grobschematisch angedeutete, einstellbare Dosiereinrichtung 12 verwendet. Der Metallzusatzwerkstoff 9 ist als Pulver mit einer Korngröße, einer Körnungsform und in einer Menge gewählt, die die Reibung an dem Leiter 3 und/oder der Aufnahmehülse 5 erhöhen und sich auch zwischen den Litzen des Leiters 3 verteilen kann. Zudem kann so ein Volumenausgleich innerhalb der Aufnahmehülse 5 erfolgen.

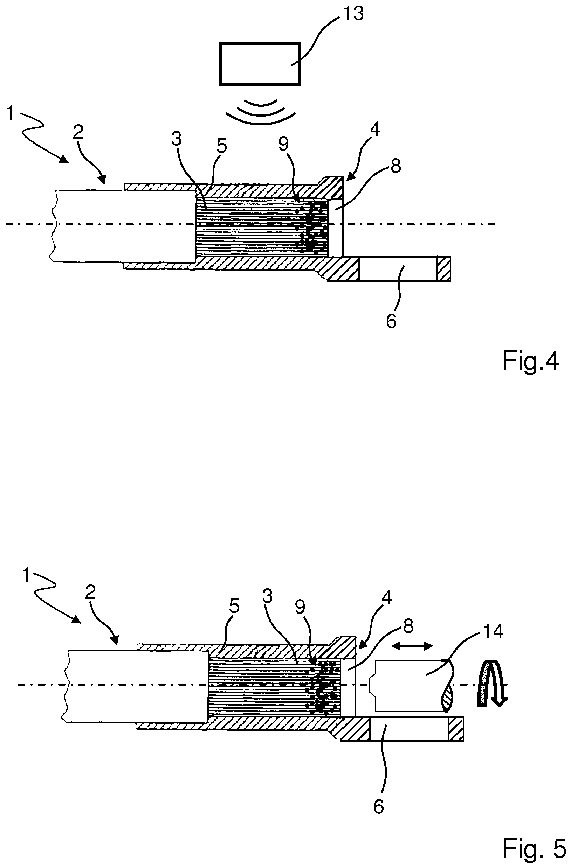

In Figur 4 ist eine Ultraschalleinrichtung 13 gezeigt, mit deren Hilfe die einzelnen Partikel bzw. Körner des Metallzusatzwerkstoffs 9 innerhalb der Aufnahmehülse 5 verteilt werden. Es ist zumindest andeutungsweise erkennbar, dass sich der Metallzusatzwerkstoff 9 in Figur 4 gegenüber der Figur 2 oder 3 großflächiger verteilt hat. Insbesondere hat sich der Metallzusatzwerkstoff 9 über den Querschnitt des Leiters 3 auch zwischen dessen Litzen verteilt.

Wie in Figur 5 gezeigt, wird dann ein Reibschweißwerkzeug 14, wie es z.B. vom Rührreibschweißen bekannt ist, durch die Öffnung 8 an die dort liegende Stirnseite des Leiters 3 herangeführt, wie dies durch einen Pfeil angedeutet ist. In Kontakt mit dem Leiter 3 und ggf. auch mit der Aufnahmehülse 5 wird das Reibschweißwerkzeug 14 dann in eine Rotationsbewegung relativ zu den Fügepartnern versetzt. Dabei erhöht der Metallzusatzwerkstoff 9 die Reibung zwischen dem Reibschweißwerkzeug 14 und den Fügepartnern. Infolgedessen wird zumindest einer der Fügepartner, ggf. aber auch beide, plastifiziert und bildet so die stoffschlüssige Verbindung 7 zwischen den Fügepartnern - also zwischen dem Leiter 3 und der Aufnahmehülse 5 - aus.

Im Fall des weiteren Ausführungsbeispiels gemäß der Figur 3 wird durch den zum Plastifizieren ohnehin benötigten Wärmeeintrags hin zu den Fügepartnern auch der Lotwerkstoff des jeweiligen Lotwerkstoffdepots 10, 11 aufgeschmolzen. Der Lotwerkstoff des ersten Lotwerkstoffdepots 10 unterstützt dann die stoffschlüssige Verbindung 7, z.B. indem die Schweißoberfläche einen Korrosionsschutz erhält. Der Lotwerkstoff des zweiten Lotwerkstoffdepots 11 bildet dann eine weitere (hier nicht gezeigte) stoffschlüssige Verbindung zwischen der Aufnahmehülse 5 und dem dazu separaten Anschlussteil 6 aus.

### BEZUGSZEICHENLISTE

- 1: Elektrische Leitungsanordnung
- 2: Elektrische Leitung
- 3: Elektrischer Leiter
- 4: Elektrisches Kontaktteil
- 5: Aufnahmehülse
- 6: Anschlussteil
- 7: Stoffschlüssige Verbindung
- 8: Stirnseitige Öffnung
- 9: Pulverförmiger Metallzusatzwerkstoff
- 10: Erstes Lotwerkstoffdepot
- 11: Zweites Lotwerkstoffdepot
- 12: Dosiereinrichtung
- 13: Ultraschalleinrichtung
- 14: Reibschweißwerkzeug

## Patentansprüche

1. Verfahren zum stoffschlüssigen Fügen einer elektrischen Leitung (2) an ein elektrisches Kontaktteil (4), mit den Schritten:
- Einbringen eines freigelegten Leitungsendes der Leitung (2) in eine Aufnahmehülse (5) des Kontaktteils (4),
- Rotieren eines Reibschweißwerkzeugs (14) an einer offenen Stirnseite der Aufnahmehülse (5) zum stoffschlüssigen Verbinden des Leitungsendes mit der Aufnahmehülse (5),
**gekennzeichnet durch**
- Einbringen eines pulverförmigen Metallzusatzwerkstoffs (9) vor dem Rotieren in die Aufnahmehülse (5) derart, dass der Metallzusatzwerkstoff (9) zumindest teilweise zwischen dem Leitungsende und/oder der Aufnahmehülse (5) und dem Reibschweißwerkzeug (14) angeordnet wird, wobei der Metallzusatzwerkstoff (9) ausgewählt oder gemischt wird aus: Messing, Bronze, Silber oder Nickel sowie deren Legierungen.

2. Verfahren nach Anspruch 1, **dadurch gekennzeichnet, dass** der Metallzusatzwerkstoff (9) vor dem Rotieren des Reibschweißwerkzeugs (14) mittels einer einstellbaren Dosiereinrichtung (12) in die Aufnahmehülse (5) eingebracht wird.

3. Verfahren nach Anspruch 1 oder 2, **dadurch gekennzeichnet, dass** der Metallzusatzwerkstoff (9) nach dem Einbringen mittels Ultraschall innerhalb der Aufnahmehülse (5) verteilt wird.

4. Verfahren nach einem der vorhergehenden Ansprüche, **dadurch gekennzeichnet, dass** der Metallzusatzwerkstoff (9) mit einer Körnungsgröße und/oder einer Körnungsform gewählt wird, die die Reibung mit dem Reibschweißwerkzeug (14) erhöht.

5. Verfahren nach einem der vorhergehenden Ansprüche, **dadurch gekennzeichnet, dass** der Metallzusatzwerkstoff (9) ein Gemisch unterschiedlicher Korngrößen und/oder Körnungsformen ist.

6. Verfahren nach einem der vorhergehenden Ansprüche, **dadurch gekennzeichnet, dass** das Kontaktteil (4) zweiteilig mit der Aufnahmehülse (5) und einem Anschlussteil (6) zum Verbinden mit einem elektrischen Gegenanschluss ausgebildet ist.

7. Verfahren nach Anspruch 6, **dadurch gekennzeichnet, dass** zum stoffschlüssigen Fügen der Aufnahmehülse (5) mit dem Anschlussteil (6) zusätzlich ein Lotwerkstoff eingebracht wird.

8. Verfahren nach Anspruch 6 oder 7, **dadurch gekennzeichnet, dass** die Aufnahmehülse (5) und/oder das Anschlussteil (6) ein Lotwerkstoffdepot aufweisen, das derart angeordnet ist, dass aufgrund des Rotierens des Reibschweißwerkzeugs (14) durch Wärmeeintrag und/oder durch eine daraus resultierende Restwärme der Lotwerkstoff zum Fügen von Aufnahmehülse (5) und Anschlussteil (6) freigesetzt wird.

9. Verfahren nach einem der Ansprüche 6 bis 8, **dadurch gekennzeichnet, dass** die Aufnahmehülse (5) und das Anschlussteil (6) vor dem Einbringen des Leitungsendes miteinander verpresst werden.

10. Verfahren nach einem der vorhergehenden Ansprüche, **dadurch gekennzeichnet, dass** vor dem Rotieren zusätzlich ein, vorzugsweise pulverförmiger, Lotwerkstoff derart in die Aufnahmehülse (5) eingebracht wird, dass der Lotwerkstoff zum Aufschmelzen in einer Wärmeeintragszone angeordnet wird.

11. Verfahren nach einem der vorhergehenden Ansprüche, **dadurch gekennzeichnet, dass** das Kontaktteil (4) ein Lotwerkstoffdepot in einer Wärmeeintragszone aufweist, aus dem aufgrund des Rotierens des Reibschweißwerkzeugs (14) durch Wärmeeintrag und/oder durch eine daraus resultierende Restwärme der Lotwerkstoff aufgeschmolzen wird.

12. Verfahren nach einem der vorhergehenden Ansprüche, **dadurch gekennzeichnet, dass** die Leitung (2) einen Leiter (3) aus einem Aluminiumwerkstoff aufweist.

13. Verfahren nach einem der vorhergehenden Ansprüche, **dadurch gekennzeichnet, dass** die Leitung (2) als Litzenleiter ausgeführt ist und der Metallzusatzwerkstoff (9) zwischen den Litzen verteilt wird.

14. Verfahren nach einem der vorhergehenden Ansprüche, **dadurch gekennzeichnet, dass** das Kontaktteil (4) wenigstens im Bereich der Aufnahmehülse (5) aus einem Kupferwerkstoff gefertigt ist.

15. Elektrische Leitungsanordnung (1), mit wenigstens einer elektrischen Leitung (2) und einem elektrischen Kontaktteil (4), die durch ein Verfahren gemäß einem der vorhergehenden Ansprüche stoffschlüssig gefügt sind, wobei die elektrische Leitungsanordnung (1) einen Metallzusatzwerkstoff (9) umfasst, welcher zumindest teilweise zwischen einem Leitungsende der elektrischen Leitung (2) und einer Aufnahmehülse (5) des elektrischen Kontaktteils (4) angeordnet ist, und welcher aus den folgenden Werkstoffen ausgewählt oder gemischt wird: Messing, Bronze, Silber oder Nickel sowie deren Legierungen.

## Claims

1. Method for the materially bonded joining of an electrical line (2) to an electrical contact part (4), comprising the steps:
- introduction of an exposed line end of the line (2) into a receiving sleeve (5) of the contact part (4),
- rotation of a friction welding tool (14) at an open end face of the receiving sleeve (5) for the materially bonded connection of the line end to the receiving sleeve (5),
**characterized by**
- introduction of a pulverulent metal filler material (9) into the receiving sleeve (5) prior to the rotation in such a way that the metal filler material (9) is at least partially arranged between the line end and/or the receiving sleeve (5) and the friction welding tool (14), wherein the metal filler material (9) is selected or mixed from: brass, bronze, silver or nickel, and also the alloys thereof.

2. Method according to Claim 1, **characterized in that** the metal filler material (9) is introduced into the receiving sleeve (5) by means of a settable metering device (12) prior to the rotation of the friction welding tool (14).

3. Method according to Claim 1 or 2, **characterized in that**, after introduction, the metal filler material (9) is distributed within the receiving sleeve (5) by means of ultrasound.

4. Method according to one of the preceding claims, **characterized in that** the metal filler material (9) is selected with a grain size and/or a grain shape which increases the friction with the friction welding tool (14).

5. Method according to one of the preceding claims, **characterized in that** the metal filler material (9) is a mixture of different grain sizes and/or grain shapes.

6. Method according to one of the preceding claims, **characterized in that** the contact part (4) is of two-part form with the receiving sleeve (5) and a connection part (6) for connecting to an electrical counterpart connection.

7. Method according to Claim 6, **characterized in that** a solder material is additionally introduced for the materially bonded joining of the receiving sleeve (5) to the connection part (6).

8. Method according to Claim 6 or 7, **characterized in that** the receiving sleeve (5) and/or the connection part (6) have a solder material deposit which is arranged in such a way that the rotation of the friction welding tool (14) causes, by heat input and/or by a resultant residual heat, the solder material to be released for the joining of receiving sleeve (5) and connection part (6).

9. Method according to one of Claims 6 to 8, **characterized in that** the receiving sleeve (5) and the connection part (6) are pressed together prior to the introduction of the line end.

10. Method according to one of the preceding claims, **characterized in that**, prior to the rotation, a preferably pulverulent solder material is additionally introduced into the receiving sleeve (5) in such a way that the solder material is arranged for melting in a heat input zone.

11. Method according to one of the preceding claims, **characterized in that** the contact part (4) has a solder material deposit in a heat input zone, the rotation of the friction welding tool (14) causing, by heat input and/or by a resultant residual heat, the solder material to be melted from said solder material deposit.

12. Method according to one of the preceding claims, **characterized in that** the line (2) has a conductor (3) composed of an aluminium material.

13. Method according to one of the preceding claims, **characterized in that** the line (2) is embodied as a stranded conductor and the metal filler material (9) is distributed between the strands.

14. Method according to one of the preceding claims, **characterized in that** the contact part (4) is manufactured from a copper material at least in the region of the receiving sleeve (5).

15. Electrical line arrangement (1), comprising at least one electrical line (2) and an electrical contact part (4) which are joined in a materially bonded manner by a method according to one of the preceding claims, wherein the electrical line arrangement (1) comprises a metal filler material (9) which is at least partially arranged between a line end of the electrical line (2) and a receiving sleeve (5) of the electrical contact part (4) and which is selected or mixed from the following materials: brass, bronze, silver or nickel, and also the alloys thereof.

## Revendications

1. Procédé, destiné à assembler par conjugaison de matière un câble électrique (2) avec une pièce de contact (4) électrique, comprenant les étapes consistant à :
- introduire une extrémité de câble dénudée du câble (2) dans une douille de logement (5) de la pièce de contact (4),
- mettre en rotation un outil de soudage par friction (14) sur une face frontale ouverte de la douille de logement (5), pour l'assemblage par conjugaison de matière de l'extrémité du câble avec la douille de logement (5),
**caractérisé par**
- avant la mise en rotation, l'introduction d'une matière d'apport (9) métallique pulvérulente dans la douille de logement (5), de telle sorte que la matière d'apport (9) métallique se place au moins partiellement entre l'extrémité du câble et/ou la douille de logement (5) et l'outil de soudage par friction (14), la matière d'apport (9) métallique étant sélectionnée ou mélangée parmi : le laiton, le bronze, l'argent ou le nickel, ainsi que leurs alliages.

2. Procédé selon la revendication 1, **caractérisé en ce qu'**avant la mise en rotation de l'outil de soudage par friction (14), l'on introduit la matière d'apport (9) métallique au moyen d'un système de dosage (12) réglable dans la douille de logement (5).

3. Procédé selon la revendication 1 ou 2, **caractérisé en ce qu'**après l'introduction, l'on distribue par ultrasons la matière d'apport (9) métallique à l'intérieur de la douille de logement (5).

4. Procédé selon l'une quelconque des revendications précédentes, **caractérisé en ce que** l'on sélectionne la matière d'apport (9) métallique avec une grosseur de grains et/ou une forme de grains qui augmente la friction avec l'outil de soudage par friction (14).

5. Procédé selon l'une quelconque des revendications précédentes, **caractérisé en ce que** la matière d'apport (9) métallique est un mélange de différentes grosseurs de grains et/ou formes de grains.

6. Procédé selon l'une quelconque des revendications précédentes, **caractérisé en ce que** la pièce de contact (4) est conçue en deux éléments, avec la douille de logement (5) et une pièce de raccordement (6), destinée à être assemblée avec un raccord électrique antagoniste.

7. Procédé selon la revendication 6, **caractérisé en ce que** pour l'assemblage par conjugaison de matière de la douille de logement (5) avec la pièce de raccordement (6), l'on introduit additionnellement une matière de brasage.

8. Procédé selon la revendication 6 ou 7, **caractérisé en ce que** la douille de logement (5) et/ou la pièce de raccordement (6) comportent un dépôt de matière de brasage, qui est placé de telle sorte que suite à la mise en rotation de l'outil de soudage par friction (14), sous l'effet de l'apport de chaleur et/ou d'une chaleur résiduelle qui en résulte, de la matière de brasage soit libérée pour assembler la douille de logement (5) et la pièce de raccordement (6).

9. Procédé selon l'une quelconque des revendications 6 à 8, **caractérisé en ce qu'**avant l'introduction de l'extrémité du câble, l'on presse l'une contre l'autre la douille de logement (5) et la pièce de raccordement (6) .

10. Procédé selon l'une quelconque des revendications précédentes, **caractérisé en ce qu'**avant la mise en rotation, l'on introduit additionnellement une matière de brasage de préférence pulvérulente dans la douille de logement (5), de sorte à placer la matière de brasage dans une zone d'apport de chaleur pour sa fusion.

11. Procédé selon l'une quelconque des revendications précédentes, **caractérisé en ce que** la pièce de contact (4) comporte un dépôt de matière de brasage dans une zone d'apport de chaleur, à partir duquel, suite à la mise en rotation de l'outil de soudage par friction (14), la matière de brasage fond sous l'effet d'un apport de chaleur et/ou d'une chaleur résiduelle qui en résulte.

12. Procédé selon l'une quelconque des revendications précédentes, **caractérisé en ce que** le câble (2) comporte un conducteur (3) en une matière aluminium.

13. Procédé selon l'une quelconque des revendications précédentes, **caractérisé en ce que** le câble (2) est réalisé sous la forme d'un conducteur à torons et l'on distribue la matière d'apport (9) métallique entre les torons.

14. Procédé selon l'une quelconque des revendications précédentes, **caractérisé en ce qu'**au moins dans la zone de la douille de logement (5), la pièce de contact (4) est fabriquée en une matière cuivrée.

15. Agencement câble électrique (1), comprenant au moins un câble électrique (2) et une pièce de contact (4) électrique, qui sont assemblés par conjugaison de matière par un procédé selon l'une quelconque des revendications précédentes, l'agencement de câble électrique (1) comprenant une matière d'apport (9) métallique laquelle est placée au moins partiellement entre une extrémité de câble du câble électrique (2) et une douille de logement (5) de la pièce de contact (4) électrique, et laquelle est sélectionnée ou mélangée à partir des matières suivantes : le laiton, le bronze, l'argent ou le nickel ainsi que leurs alliages.
